# FASCICULE DE BREVET EUROPEEN

(11) **EP 1 144 877 B1**
(45) Date de publication et mention de la délivrance du brevet: **04.01.2006**
(21) Numéro de dépôt: 00958616.5
(22) Date de dépôt: 26.07.2000
(51) Int. Cl.: F16C 3/20, F16F 15/32

(54) **PROCEDE D'USINAGE D'UN VILEBREQUIN A DISPOSITION ORIGINALE DE L'OPERATION D'EQUILIBRAGE ET DISPOSITIF PERMETTANT DE LE METTRE EN OEUVRE**
VERFAHREN ZUR BEARBEITUNG EINER KURBELWELLE MIT ORIGINALER AUSGLEICHREGELUNG UND VERWENDETE VORRICHTUNG
METHOD FOR MACHINING A CRANKSHAFT WITH ORIGINAL ARRANGEMENT OF THE BALANCING OPERATION AND IMPLEMENTING DEVICE

(30) Priorité: 02.08.1999 FR 9910008
(43) Date de publication de la demande: 17.10.2001
(73) Titulaire: RENAULT AUTOMATION COMAU, 92365 Meudon La Forêt Cedex (FR)
(72) Inventeur: ASSIE, Jean-Paul, F-81100 Castres (FR)
(74) Mandataire: Richebourg, Michel François
(86) Numéro de dépôt international: PCT/FR2000/002141
(87) Numéro de publication internationale: WO 2001/009528

(56) Documents cités:
- GB-A- 1 313 492
- US-A- 4 884 210
- US-A- 5 131 143
- US-A- 5 408 745
- PATENT ABSTRACTS OF JAPAN vol. 17, no. 68 (M-1365), 10 février 1993 (1993-02-10) & JP 04 272543 A (NISSAN), 29 septembre 1992 (1992-09-29)
- PATENT ABSTRACTS OF JAPAN vol. 14, no. 203 (M-0966), 25 avril 1990 (1990-04-25) & JP 02 041730 A (MAZDA), 9 février 1990 (1990-02-09)

## Description

### DOMAINE D'APPLICATION DE L'INVENTION

La présente invention a trait au domaine de l'usinage et notamment aux adaptations permettant d'assurer l'usinage complet d'un vilebrequin dans les meilleures conditions possibles. Un procédé d'usinage d'un villebrequin ayant les caractéristiques du préambule de revendication 1 est décrit dans US 5408745.

### DESCRIPTION DE L'ART ANTÉRIEUR

Les vilebrequins sont des pièces mécaniques se présentant sous la forme d'arbres qui assurent la transformation du mouvement rectiligne alternatif de l'ensemble piston-bielle d'un moteur thermique en mouvement rotatif. Ces pièces sont réalisées classiquement par forgeage ou moulage avant d'être usinées précisément.

Pour l'exemple d'un moteur thermique à quatre cylindres, le vilebrequin comporte cinq paliers au moyen desquels il est en liaison pivot avec le carter, quatre manetons disposés parallèlement à l'axe de rotation du vilebrequin et servant à entraîner les quatre bielles et quatre contre-poids assurant un équilibre des masses du vilebrequin par rapport à son axe de rotation avec les quatre manetons et les huit bras qui les décalent de l'axe de rotation du vilebrequin.

Classiquement, le début de la chaîne de fabrication par enlèvement de matière d'un vilebrequin comprend les opérations suivantes :
- définition des points de départ,
- usinage des extrémités,
- usinage des paliers,
- usinage des manetons, et
- réalisation des trous d'huile,
viennent ensuite diverses opérations dites de finition et l'équilibrage final par mesure dynamique et éventuel débalourdage par enlèvement de matière.

### DESCRIPTION DE L'INVENTION

Des améliorations dans la détermination des points départ par centrage du vilebrequin telles celles décrites dans le brevet français n° 2761129 ont conduit la demanderesse à étudier et mettre en oeuvre une succession différente d'opérations dans le procédé d'usinage classique d'un vilebrequin.

En effet, les opérations d'usinage coûtant cher, il est primordial de limiter leur nombre et leur durée tout en respectant les contraintes géométriques et dynamiques définies par les constructeurs automobiles.

Ces études ont abouti à la conception d'un procédé d'usinage nouveau permettant d'optimiser la fabrication des vilebrequins.

Selon la caractéristique principale de l'invention, le procédé d'usinage de l'invention est remarquable en ce qu'il consiste à réaliser les opérations de mesure dynamique des masses et d'enlèvement de matière à des fins d'équilibrage avant les opérations de finition.

Cette caractéristique est particulièrement judicieuse en ce qu'elle permet d'assurer l'équilibrage du vilebrequin avant les opérations où le balourd et l'enlèvement de matière n'évolueront pas beaucoup. En effet, les opérations dites de finition et de super finition, comme leur nom l'indique, n'enlèvent pas beaucoup de matière et n'influent donc pas de manière significative sur le balourd du vilebrequin. Dans tous les cas, l'enlèvement de matière sur de telles opérations est paramétrable.

Cette disposition originale de l'opération d'équilibrage dans le procédé d'usinage d'un vilebrequin de l'invention a donc plusieurs avantages. D'une part, elle permet de supprimer l'opération de débalourdage par perçage des vilebrequins à la fin de leur chaîne de réalisation par enlèvement de matière et d'autre part, elle assure une mesure dynamique des masses lors d'une opération se trouvant particulièrement près de l'opération de définition des points de départ ce qui assure une correction plus aisée et plus rapide si ladite définition des points de départ définissait des surfaces de références demandant trop d'enlèvement de matière dans les opérations suivantes.

L'opération et le dispositif de mesure dynamique des masses ne sont pas nouveaux mais l'exécution de cette opération à ce moment là de la chaîne de réalisation par enlèvement de matière d'un vilebrequin est particulièrement nouvelle et inventive. Ce changement de concept dans la réalisation d'un vilebrequin n'a pu être accompli que grâce aux progrès récents réalisés dans la bonne définition des points de départ sur les vilebrequins à usiner.

En effet, les procédés de l'art antérieur avaient pour concept de ne réaliser la mesure et l'équilibrage d'un vilebrequin que lorsque ce dernier était passé par toutes les phases d'enlèvement de matière que ce soit d'usinage de semi-finition ou de finition. Ainsi, l'ensemble de la chaîne d'usinage pouvait assurer la réalisation d'un mauvais usinage sur un vilebrequin du fait, par exemple, de points de départ mal définis sans pouvoir détecter ce mauvais vilebrequin avant la fin de chaîne de fabrication c'est à dire lors de l'opération d'équilibrage final. Aussi, le procédé de l'invention obvie non seulement à cet inconvénient de la détection tardive d'un mauvais vilebrequin mais permet également de le corriger.

Les concepts fondamentaux de l'invention venant d'être exposés ci-dessus dans leur forme la plus élémentaire, d'autres détails et caractéristiques ressortiront plus clairement à la lecture de la description qui suit, donnant à titre d'exemple non limitatif, un mode de réalisation d'un procédé d'usinage d'un vilebrequin à disposition originale de l'opération d'équilibrage conforme à l'invention.

Pour mieux illustrer la description qui suit, un exemple non limitatif de chaîne d'usinage de vilebrequin est décrit ci-dessous.
Opération 1 :
   réalisation des points de départ par centrage géométrique et ou dynamique.
Opération 2 :
   réalisation des extrémités du vilebrequin pour tournage et/ou par tournage arasage.
Opération 3 :
   Réalisation des paliers par tournage, arasage, tournage-arasage et/ou fraisage tournage.
Opération 4 :
   Réalisation des manetons par tournage, arasage, tournage-arasage et/ou fraisage-tournage.
Opération 5 :
   Réalisation des trous d'huiles par perçage et/ou par forage.
Opération 6 :
   Lavage.
Opération 7 :
   Traitement thermique revenu.
Opération 8 :
   Galetage.
Opération 9 :
   Finition des paliers.
Opération 10 :
   Finition des manetons.
Opération 11 :
   Finition des fixations des extrémités par perçage, taraudage, alésage fraisage.
Opération 12 :
   Réalisation des paliers et de la butée par tournage.
Opération 13 :
   Finition du plateau du vilebrequin.
Opération 14 :
   Finition de la queue du vilebrequin.
opération 15 :
   Réalisation de l'équilibrage dynamique par débalourdage et par perçage.
Opération 16 :
   Phase dite de superfinition.
Opération 17 :
   Montage des accessoires par assemblage à chaud.
Opération 18 :
   Lavage.
Opération 19 :
   Contrôle final.

Au vu d'une telle succession d'opérations, il peut être défini plusieurs ensembles d'opérations :
- un premier ensemble dit d'opérations d'usinage à grand enlèvement de matière constitué par les opérations 2 à 5,
- un deuxième ensemble dit d'opérations de finition constitué par les opérations 9 à 14.

Selon une caractéristique particulièrement avantageuse, le procédé de l'invention est remarquable en ce qu'il consiste à intercaler entre les opérations d'usinage des extrémités, paliers et manetons du vilebrequin et celle de réalisation des trous d'huile dans le vilebrequin, une opération de mesure dynamique des masses du vilebrequin usiné.

La réalisation d'une mesure dynamique à ce stade de la chaîne d'usinage du vilebrequin est particulièrement avantageuse en ce qu'elle se situe entre la dernière opération d'enlèvement conséquent de matière c'est à dire la réalisation des trous d'huile et l'avant dernière opération c'est à dire celle de la réalisation des manetons. En effet, suite à l'opération de réalisation des trous d'huile viennent les opérations de lavage, de traitement thermique et de galetage, puis celles de finition pendant lesquelles l'enlèvement de matière est minime ou du moins paramétrable.

Selon une caractéristique particulièrement judicieuse de l'invention imaginée par la demanderesse, le procédé d'usinage de l'invention consiste à réaliser l'opération d'enlèvement de matière à des fins d'équilibrage lors de l'opération de réalisation des trous d'huile sur le vilebrequin. Ainsi, non seulement le procédé de l'invention obvie aux inconvénients des procédés de l'art antérieur mais évite la mise en oeuvre d'une machine-outil supplémentaire pour la réalisation du débalourdage. En conséquence, ce n'est pas une machine telle celle prévue pour l'opération 15 qui sera intercalée entre le dispositif de mesure dynamique des masses et la réalisation des trous d'huile mais bien une seule et même machine qui réalisera l'enlèvement de matière pour la réalisation des trous d'huile et les trous de débalourdage.

En outre, selon un mode de réalisation particulièrement judicieux, le procédé d'usinage de l'invention est remarquable en ce qu'une fois l'opération d'enlèvement de matière à des fins d'équilibrage réalisée sur le vilebrequin, ce dernier est soumis à une opération de mesure dynamique des masses. Ainsi, la demanderesse prévoit une mesure dynamique des masses après enlèvement de matière à des fins d'usinage et perçage des trous d'huile. Cette phase permet de vérifier la qualité de l'équilibrage réalisé. De plus, étant donnée la proximité dans l'enchaînement des opérations du procédé de l'invention, d'une autre opération de mesure dynamique des masses à savoir celle prévue après les opérations d'usinage des paliers, manetons et extrémités du vilebrequin, le dispositif permettant de mettre en oeuvre une telle mesure pourra être exploité pour la mesure dynamique des masses aussi bien avant l'opération d'enlèvement de matière et perçage des trous d'huile, qu'après.

De même, comme c'est le cas dans la chaîne d'usinage proposée en exemple non limitatif, lorsque le procédé d'usinage est du type de celui où la définition des points de départ est réalisée par perçage des extrémités pré-usinées du vilebrequin et que lors dudit perçage le vilebrequin est positionné sur des appuis numérisés au niveau de ses surfaces pré-usinées, le procédé de l'invention est remarquable en ce qu'il consiste à mesurer dynamiquement le balourd du vilebrequin après les opérations d'usinage des paliers, manetons et extrémités et à transmettre les mesures de ce balourd d'une part au dispositif d'enlèvement de matière à des fins d'équilibrage dans l'éventualité où le vilebrequin mesuré peut être équilibré et d'autre part, au dispositif de tenue du vilebrequin lors du perçage des points de départ afin de corriger la localisation du centre géométrique de sorte que le balourd des vilebrequins suivants en sortie d'usinage puisse être équilibré.

La demanderesse a également pensé à utiliser pour cette opération un procédé de type connu sous le nom commercial "digital way" permettant d'informer la partie commande de la machine-outil du moment où l'outil touche la pièce à usiner permettant d'assurer très précisément une course d'usinage.

Afin de mettre en oeuvre la caractéristique du procédé consistant à réaliser une opération de mesure dynamique des masses après réalisation de l'opération d'enlèvement de matière à des fins d'équilibrage et de perçage des trous d'huile, le dispositif de l'invention comporte avantageusement un module de transfert assurant les déplacements successifs des vilebrequins entre le dispositif de mesure dynamique du balourd du vilebrequin et ladite machine-outil. Ce module de transfert assurera en conséquence, les éventuels allers et retours nécessaires au bon équilibrage du vilebrequin avant les opérations suivant celles du perçage des trous d'huile. Ce module de transfert a pour autre avantage de ne pas attendre une éventuelle mesure ou vérification d'équilibre du vilebrequin en fin de chaîne pour s'apercevoir que le vilebrequin comporte un balourd trop important.

De plus, ce module de transfert du type de celui assurant la prise de la pièce dans le dispositif de mesure et la pose de cette dernière dans le montage d'usinage de la machine-outil et vice-versa, peut avoir pour fonction de réaliser la liaison ponctuelle entre une chaîne d'usinage de vilebrequins et une machine-outil du type de celle décrite plus haut qui peut être intégrée à une autre chaîne de fabrication. Cette fonction de lien entre deux chaînes d'usinage est particulièrement adéquate lors de la réalisation de petite série de vilebrequins. Aussi, non seulement, le procédé d'usinage du vilebrequin et le dispositif permettant de le mettre en oeuvre ont pour avantage d'exploiter une seule machine-outil pour la réalisation dès l'enlèvement de matière à des fins d'équilibrage et pour le perçage des trous d'huile mais elle offre aussi la possibilité d'exploiter une machine-outil située en dehors de la chaîne d'usinage du vilebrequin ou du moins non exclusivement dédiée à cette chaîne d'usinage.

Bien entendu, divers aménagements, modifications et améliorations pourront être apportés à l'exemple ci-dessus, sans pour autant sortir du cadre de l'invention telle que définie par les revendications.

Ainsi, par exemple, pour contrôler la qualité de l'équilibrage, il peut être envisagé dans certains cas, une opération de mesure dynamique des masses en fin de chaîne d'usinage et non une opération d'équilibrage par mesure et enlèvement de matière comme dans les chaînes d'usinage de vilebrequins classiques.

De même, sans sortir du cadre de l'invention, il est envisagé que le dispositif de mesure dynamique des masses puisse être exploité comme montage d'usinage adapté à la machine-outil réalisant l'enlèvement de matière à des fins d'équilibrage et de perçage des trous d'huile.

## Revendications

1. Procédé d'usinage de vilebrequin du type de celui comportant les opérations principales suivantes :
- détermination des points de départ,
- usinage des extrémités, paliers et manetons,
- réalisation des trous d'huile,
- finition des extrémités, paliers et manetons,
- mesure dynamique et éventuel enlèvement de matière à des fins d'équilibrage, **CARACTÉRISÉ EN CE Qu'**il consiste à réaliser les opérations de mesure dynamique des masses et d'enlèvement de matière à des fins d'équilibrage, avant les opérations de finition.

2. Procédé d'usinage selon la revendication 1, **CARACTÉRISÉ EN CE QU'**il consiste à intercaler entre les opérations d'usinage des extrémités, paliers et manetons du vilebrequin et celle de réalisation des trous d'huile dans le vilebrequin, une opération de mesure dynamique des masses du vilebrequin usiné.

3. Procédé d'usinage selon les revendications 1 et 2, **CARACTÉRISÉ EN CE QU'**il consiste à réaliser l'opération d'enlèvement de matière à des fins d'équilibrage lors de l'opération de réalisation des trous d'huile sur le vilebrequin.

4. Procédé d'usinage selon la revendication 2 du type de celui où la définition des points de départ est réalisée par perçage des extrémités pré-usinées du vilebrequin et que lors dudit perçage, le vilebrequin est positionné sur des appuis numérisés au niveau de ses surfaces pré-usinées, **CARACTÉRISÉ EN CE QU'**il consiste à mesurer dynamiquement le balourd du vilebrequin après les opérations d'usinage des paliers, manetons et extrémités et à transmettre les mesures de ce balourd d'une part au dispositif d'enlèvement de matière à des fins d'équilibrage dans l'éventualité où le vilebrequin mesuré peut être équilibré et au dispositif de tenue du vilebrequin lors du perçage des points de départ afin de corriger la localisation du centre géométrique de sorte que le balourd des vilebrequins suivants en sortie d'usinage puisse être équilibré.

5. Procédé d'usinage selon la revendication 3, **CARACTÉRISÉ EN CE QU'**une fois l'opération d'enlèvement de matière à des fins d'équilibrage réalisée sur le vilebrequin, ce dernier est soumis à une opération de mesure dynamique des masses.

## Patentansprüche

1. Verfahren zur Bearbeitung einer Kurbelwelle von dem Typ, das die folgenden Hauptvorgänge umfasst:
- Bestimmung der Anfangspunkte,
- Bearbeitung der Enden, Lager und Zapfen,
- Bildung der Ölbohrungen,
- Endbearbeitung der Enden, Lager und Zapfen,
- dynamische Messung und eventuelles Abheben von Material zu Auswuchtungszwecken, **dadurch gekennzeichnet, dass** es darin besteht, die Vorgänge der dynamischen Messung der Massen und des Abhebens von Material zu Auswuchtungszwecken vor den Endbearbeitungsvorgängen durchzuführen.

2. Bearbeitungsverfahren nach Anspruch 1, **dadurch gekennzeichnet, dass** es darin besteht, zwischen die Vorgänge der Bearbeitung der Enden, Lager und Zapfen der Kurbelwelle und jenem der Bildung der Ölbohrungen in der Kurbelwelle einen Vorgang der dynamischen Messung der Massen der bearbeiteten Kurbelwelle einzufügen.

3. Bearbeitungsverfahren nach den Ansprüchen 1 und 2, **dadurch gekennzeichnet, dass** es darin besteht, den Vorgang des Abhebens von Material zu Auswuchtungszwecken während des Vorgang der Bildung der Ölbohrungen an der Kurbelwelle durchzuführen.

4. Bearbeitungsverfahren nach Anspruch 2 von dem Typ, bei dem die Definition der Anfangspunkte durch Bohren der vorbearbeiteten Enden der Kurbelwelle ausgeführt wird und bei dem während dieser Bohrung die Kurbelwelle auf digitalisierten Auflagen in der Höhe ihrer vorbearbeiteten Oberflächen positioniert wird, **dadurch gekennzeichnet, dass** es darin besteht, die Unwucht der Kurbelwelle nach den Vorgängen der Bearbeitung der Lager, Zapfen und Enden dynamisch zu messen und die Messwerte dieser Unwucht zu übermitteln: einerseits an die Vorrichtung zum Abheben von Material zu Auswuchtungszwecken im Fall, dass die gemessene Kurbelwelle ausgewuchtet werden kann, und an die Vorrichtung zum Halten der Kurbelwelle beim Bohren der Anfangspunkte, um die Lokalisierung des geometrischen Zentrums zu korrigieren, so dass die Unwucht der folgenden Kurbelwellen am Ende der Bearbeitung ausgeglichen werden kann.

5. Bearbeitungsverfahren nach Anspruch 3, **dadurch gekennzeichnet, dass**, nachdem der Vorgang des Abhebens von Material zu Auswuchtungszwecken an der Kurbelwelle ausgeführt wurde, die Letztgenannte einem Vorgang der dynamischen Messung der Massen unterzogen wird.

## Claims

1. Crankshaft machining process of the type comprising the following main operations:
- determine the start points,
- machining of the ends, bearing journals and crank pins,
- make oil holes,
- finish the ends, bearings and crank pins,
- dynamic measurement and possibly removal of material for balancing purposes, **characterised in that** it consists of performing dynamic mass measurement operations and removal of material for balancing purposes, before the finishing operations.

2. Machining process according to claim 1, **characterised in that** it consists of including an operation to make a dynamic mass measurement of the machined crankshaft, between the machining operations on the ends, bearings and crank pins of the crankshaft and the operation to make oil holes in the crankshaft.

3. Machining process according to claims 1 and 2, **characterised in that** it consists of performing the material removal operation for balancing purposes during the operation to make oil holes in the crankshaft.

4. Machining process according to claim 2, of the type in which the start points are defined by drilling the pre-machined ends of the crankshaft and in that during the said drilling, the crankshaft is positioned on digitised bearing supports at its pre-machined surfaces, **characterised in that** it consists of dynamically measuring the unbalanced mass of the crankshaft after the machining operations of the bearing journals, crank pins and ends have been carried out, and transmitting the measurements of this unbalanced mass firstly to the material removal device for balancing purposes if the measured crankshaft can be balanced, and to the crankshaft retaining device when the start points are being drilled in order to correct the location of the geometric centre so that the unbalanced mass of subsequent crankshafts at the output from machining can be balanced.

5. Machining process according to claim 3, **characterised in that** a dynamic mass measurement is made on the crankshaft after the operation to remove material for balancing purposes has been done on the crankshaft
